# EUROPEAN PATENT APPLICATION

(11) **EP 4 671 663 A1**
(43) Date of publication of application: **31.12.2025**
(21) Application number: 23931812.4
(22) Date of filing: 30.11.2023
(51) Int. Cl.: F28F 1/02

(54) **CONDENSING HEAT EXCHANGER AND VEHICLE**

(30) Priority: 04.04.2023 CN 202310352641
(71) Applicant: Yutong Bus Co., Ltd., Zhengzhou, Henan 450061 (CN)
(72) Inventor: BIAN, Lili, Zhengzhou, Henan 450061 (CN); JIANG, Youai, Zhengzhou, Henan 450061 (CN); GUO, Xingguang, Zhengzhou, Henan 450061 (CN); ZHANG, Zebin, Zhengzhou, Henan 450061 (CN); SHENG, Lei, Zhengzhou, Henan 450061 (CN)
(74) Representative: Gulde & Partner
(86) International application number: PCT/CN2023/135394
(87) International publication number: WO 2024/207766

(57) **Abstract**

The present invention relates to the field of on-board air conditioners, and in particular, to a condensing heat exchanger and a vehicle. The condensing heat exchanger includes at least two rows of heat exchange cores arranged in a front-rear direction. A frontmost-row heat exchange core is arranged for windward placement. Heat exchange channels of heat exchange cores in any two adjacent rows are in communication. A rear-row heat exchange core of two adjacent rows of heat exchange cores is a first heat exchange core through which a refrigerant passes first, and a front-row heat exchange core of the two adjacent rows of heat exchange cores is a subsequent heat exchange core through which the refrigerant passes subsequently. During heat dissipation, a refrigerant with a higher temperature first dissipates heat in the rear-row heat exchange core, then the refrigerant with a lower temperature flows to the front-row heat exchange core for heat dissipation, and then heated air flows through the rear-row heat exchange core with a higher temperature. In this way, both the front-row and rear-row heat exchange cores can achieve a specific degree of heat dissipation, so that the heat dissipation is more equalized, thereby solving a problem that heat dissipation of the heat exchange cores is unequalized as a result of the refrigerant flowing from the front-row heat exchange core to the rear-row heat exchange core together with cooling air that flows from front to rear in the double-row heat exchanger.

## Description

### TECHNICAL FIELD

The present invention relates to the field of on-board air conditioners, and in particular, to a condensing heat exchanger and a vehicle.

### BACKGROUND

An evaporator, a condenser, and a compressor are essential components of an on-board air conditioner. A refrigerant absorbs heat in the evaporator and turns to a high-temperature gas, and then enters the condenser under propulsion of the compressor, to release heat and turns to a liquid refrigerant. In other words, the refrigerant transfers heat inside a passenger compartment to outside of the passenger compartment through the condenser. Heat dissipation efficiency of the condenser directly affects refrigeration efficiency inside the passenger compartment.

The Chinese patent application with publication number No. CN115420120A discloses a parallel flow micro-channel heat exchanger, which includes two heat exchange cores arranged side by side in a front-rear direction to increase a heat dissipation area. A front-row heat exchange core is provided with an inlet hole connected to a fluid inlet pipe, so as to receive high-temperature and high-pressure gas from a compressor. The gas flows through a flow channel of a front heat exchange core (i.e., the front-row heat exchange core), and then a refrigerant flows to a rear heat exchange core (i.e., the rear-row heat exchange core) through a connection block arranged in communication between the two heat exchange cores, and then the refrigerant flowing out from the rear heat exchange core flows to the front heat exchange core through the connection block. The refrigerant is discharged through an outlet hole on the front heat exchange core for a next cycle of use.

In the foregoing technical solution, natural air with a lower temperature first exchanges heat with the front heat exchange core, and then the heated natural air flows to the rear heat exchange core for heat exchange with the rear-row heat exchange core. However, because the inlet hole is located on the front heat exchange core, the temperature of the front heat exchange core is higher, causing the temperature of the natural air to increase after the natural air passes through the front heat exchange core, resulting in a smaller temperature difference between inside and outside of the rear-row heat exchange core during heat dissipation of the rear-row heat exchange core. Consequently, heat dissipation of the heat exchange cores is unequalized.

### SUMMARY

The present invention is intended to provide a condensing heat exchanger, to solve a problem in the related art that heat dissipation of heat exchange cores is unequalized as a result of a refrigerant flowing from a front-row heat exchange core to a rear-row heat exchange core together with cooling air that flows from front to rear in a double-row heat exchanger. The present invention is further intended to provide a vehicle to solve the foregoing technical problem.

In order to achieve the above objectives, the condensing heat exchanger in the present invention adopts the following technical solutions:

A condensing heat exchanger includes at least two rows of heat exchange cores arranged in a front-rear direction. A frontmost-row heat exchange core is arranged for windward placement. Heat exchange channels of heat exchange cores in any two adjacent rows are in communication. A rear-row heat exchange core of two adjacent rows of heat exchange cores is a first heat exchange core through which a refrigerant passes first, and a front-row heat exchange core of the two adjacent rows of heat exchange cores is a subsequent heat exchange core through which the refrigerant passes subsequently.

The foregoing technical solution has the following beneficial effects: According to the present invention, improvements are made on an existing condensing heat exchanger. Heat exchange channels of any two adjacent rows of heat exchange cores are brought into communication, so that the condensing heat exchanger has a larger heat dissipation area; the rear-row heat exchange core of two adjacent rows of heat exchange cores is a first heat exchange core through which a refrigerant passes first, and the front-row heat exchange core of the two adjacent rows of heat exchange cores is a subsequent heat exchange core through which the refrigerant passes subsequently, so that during heat dissipation, a refrigerant with a higher temperature first dissipates heat in the rear-row heat exchange core, and then the refrigerant with a lower temperature flows to the front-row heat exchange core for heat dissipation, and therefore natural air first passes through the front-row heat exchange core with a lower temperature, preventing the air from being heated to a very high temperature. The heated air then flows through the rear-row heat exchange core with a higher temperature, which can dissipate heat in the rear-row heat exchange core. In this way, both the front-row and rear-row heat exchange cores can achieve a specific degree of heat dissipation, so that the heat dissipation is more equalized, thereby solving the problem that heat dissipation of the heat exchange cores is unequalized as a result of the refrigerant flowing from the front-row heat exchange core to the rear-row heat exchange core together with cooling air that flows from front to rear in the double-row heat exchanger.

Further, the rear-row heat exchange core of the two adjacent rows of heat exchange cores has an overlapping portion overlapping the front-row heat exchange core in the front-rear direction, and further has an exposed portion exposed from at least one side of an upper side, a lower side, a left side, and a right side of the front-row heat exchange core, and the front-row heat exchange core of the two adjacent rows of heat exchangers has a corresponding portion arranged corresponding to the overlapping portion of the rear-row heat exchange core. A part or an entirety of the overlapping portion of the rear-row heat exchange core of the two adjacent rows of heat exchangers is in communication with the corresponding portion of the front-row heat exchange core. The part or the entirety of the overlapping portion of the rear-row heat exchange core forms the first heat exchange core, and the corresponding portion of the front-row heat exchange core forms the subsequent heat exchange core.

The foregoing technical solution has the following beneficial effects: The overlapping portion on the rear-row heat exchange core is used as the first heat exchange core, so that the refrigerant first passes through the overlapping portion covered by the front-row heat exchange core, thereby helping improve heat dissipation efficiency of the first heat exchange core, and improving heat dissipation efficiency of the entire rear-row heat exchange core.

Further, in at least one group of two adjacent rows of heat exchange cores among the rows of heat exchange cores, an area of the rear-row heat exchange core is greater than an area of the front-row heat exchange core, and the upper and lower sides and/or left and right sides of the rear-row heat exchange core each have the exposed portion.

The foregoing technical solution has the following beneficial effects: The area of the rear-row heat exchange core is greater than the area of the front-row heat exchange core, so that the rear-row heat exchange core has a relatively large exposed portion, thereby helping improve the heat dissipation efficiency of the rear-row heat exchange core.

Further, areas of the exposed portions on the upper and lower sides are not equal, the exposed portion with a smaller area is in communication with the overlapping portion, and the exposed portion with a larger area is provided with an independent heat exchange channel; and/or areas of the exposed portions on the left and right sides are not equal, the exposed portion with a smaller area is in communication with the overlapping portion, and the exposed portion with a larger area is provided with an independent heat exchange channel.

The foregoing technical solution has the following beneficial effects: Forming an independent heat exchange channel facilitates formation of two heat exchange channels, thereby enabling separate control of different regions. In addition, providing an independent heat exchange channel in the exposed portion having a larger area facilitates to improve heat dissipation efficiency of the exposed portion.

Further, a connection block is arranged between two adjacent rows of heat exchange cores to maintain a set spacing therebetween.

The foregoing technical solution has the following beneficial effects: Maintaining a spacing between two adjacent rows of heat exchange cores helps air flow through the spacing, thereby helping improve the heat exchange efficiency of the rear-row heat exchange core.

Further, the condensing heat exchanger further includes a dry reservoir in communication with heat exchange channels of at least one row of heat exchange cores.

The foregoing technical solution has the following beneficial effects: A problem of refrigerant moisture contamination or refrigerant shortage due to long-term use is avoided.

In order to achieve the foregoing objective, the vehicle in the present invention adopts the following technical solutions:

The vehicle includes an air conditioner system. The air conditioner system includes a condensing heat exchanger. The condensing heat exchanger includes at least two rows of heat exchange cores arranged in a front-rear direction. A frontmost-row heat exchange core is arranged for windward placement. Heat exchange channels of heat exchange cores in any two adjacent rows are in communication. A rear-row heat exchange core of two adjacent rows of heat exchange cores is a first heat exchange core through which a refrigerant passes first, and a front-row heat exchange core of the two adjacent rows of heat exchange cores is a subsequent heat exchange core through which the refrigerant passes subsequently.

The foregoing technical solution has the following beneficial effects: According to the present invention, improvements are made on an existing vehicle. Heat exchange channels of any two adjacent rows of heat exchange cores are brought into communication, so that the condensing heat exchanger has a larger heat dissipation area; the rear-row heat exchange core of two adjacent rows of heat exchange cores is a first heat exchange core through which a refrigerant passes first, and the front-row heat exchange core of the two adjacent rows of heat exchange cores is a subsequent heat exchange core through which the refrigerant passes subsequently, so that during heat dissipation, a refrigerant with a higher temperature first dissipates heat in the rear-row heat exchange core, and then the refrigerant with a lower temperature flows to the front-row heat exchange core for heat dissipation, and therefore natural air first passes through the front-row heat exchange core with a lower temperature, preventing the air from being heated to a very high temperature. The heated air then flows through the rear-row heat exchange core with a higher temperature, which can dissipate heat in the rear-row heat exchange core. In this way, both the front-row and rear-row heat exchange cores can achieve a specific degree of heat dissipation, so that the heat dissipation is more equalized, thereby solving the problem that heat dissipation of the heat exchange cores is unequalized as a result of the refrigerant flowing from the front-row heat exchange core to the rear-row heat exchange core together with cooling air that flows from front to rear in the double-row heat exchanger.

Further, the rear-row heat exchange core of the two adjacent rows of heat exchange cores has an overlapping portion overlapping the front-row heat exchange core in the front-rear direction, and further has an exposed portion exposed from at least one side of an upper side, a lower side, a left side, and a right side of the front-row heat exchange core, and the front-row heat exchange core of the two adjacent rows of heat exchangers has a corresponding portion arranged corresponding to the overlapping portion of the rear-row heat exchange core. A part or an entirety of the overlapping portion of the rear-row heat exchange core of the two adjacent rows of heat exchangers is in communication with the corresponding portion of the front-row heat exchange core. The part or the entirety of the overlapping portion of the rear-row heat exchange core forms the first heat exchange core, and the corresponding portion of the front-row heat exchange core forms the subsequent heat exchange core.

The foregoing technical solution has the following beneficial effects: The overlapping portion on the rear-row heat exchange core is used as the first heat exchange core, so that the refrigerant first passes through the overlapping portion covered by the front-row heat exchange core, thereby helping improve heat dissipation efficiency at the portion, and improving heat dissipation efficiency of the entire rear-row heat exchange core.

Further, in at least one group of two adjacent rows of heat exchange cores among the rows of heat exchange cores, an area of the rear-row heat exchange core is greater than an area of the front-row heat exchange core, and the upper and lower sides and/or left and right sides of the rear-row heat exchange core each have the exposed portion.

The foregoing technical solution has the following beneficial effects: The area of the rear-row heat exchange core is greater than the area of the front-row heat exchange core, so that the rear-row heat exchange core has a relatively large exposed portion, thereby helping improve the heat dissipation efficiency of the rear-row heat exchange core.

Further, areas of the exposed portions on the upper and lower sides are not equal, the exposed portion with a smaller area is in communication with the overlapping portion, and the exposed portion with a larger area is provided with an independent heat exchange channel; and/or areas of the exposed portions on the left and right sides are not equal, the exposed portion with a smaller area is in communication with the overlapping portion, and the exposed portion with a larger area is provided with an independent heat exchange channel.

The foregoing technical solution has the following beneficial effects: Forming an independent heat exchange channel helps form two heat exchange channels to separately control different regions. In addition, providing an independent heat exchange channel in the exposed portion having a larger area helps improves heat dissipation efficiency of the exposed portion.

Further, a connection block is arranged between two adjacent rows of heat exchange cores to maintain a set spacing therebetween.

The foregoing technical solution has the following beneficial effects: Maintaining a spacing between two adjacent rows of heat exchange cores helps air flow through the spacing, thereby helping improve the heat exchange efficiency of the rear-row heat exchange core.

Further, the condensing heat exchanger further includes a dry reservoir in communication with heat exchange channels of at least one row of heat exchange cores.

The foregoing technical solution has the following beneficial effects: A problem of water being contained in the refrigerant or a lack of a refrigerant after long-term use is avoided.

Further, the air conditioner system includes a cooling fan arranged behind the condensing heat exchanger, and the cooling fan is configured to draw air, so that the air passes through the rows of heat exchange cores in sequence from front to rear.

The foregoing technical solution has the following beneficial effects: Arranging the cooling fan increases a volume of air flow, thereby improving heat dissipation efficiency.

Further, an area of the cooling fan is less than or equal to an area of a rearmost-row heat exchange core.

The foregoing technical solution has the following beneficial effect: A waste caused by an excessively large area of a cooling fan is avoided.

Further, an area of the cooling fan is less than an area of a rearmost-row heat exchange core, and the cooling fan is located on a rear side of a middle portion of the rearmost-row heat exchange core.

The foregoing technical solution has the following beneficial effects: The cooling fan helps guide flowing of gas. Because the cooling fan is located on the rear side of the middle portion of the heat exchange core, gas can be guided to move toward the middle portion.

### BRIEF DESCRIPTION OF THE DRAWINGS

FIG. 1 is a three-dimensional view of a condensing heat exchanger in Embodiment 1 of a vehicle according to the present invention;
FIG. 2 is a three-dimensional view of the condensing heat exchanger in Embodiment 1 of the vehicle according to the present invention from another perspective;
FIG. 3 is a front view of the condensing heat exchanger in Embodiment 1 of the vehicle according to the present invention;
FIG. 4 is a schematic structural diagram of a front-row heat exchange core of the condensing heat exchanger in Embodiment 1 of the vehicle according to the present invention;
FIG. 5 is a schematic structural diagram of a rear-row heat exchange core of the condensing heat exchanger in Embodiment 1 of the vehicle according to the present invention; and
FIG. 6 is a schematic diagram of gas flow in Embodiment 1 of the vehicle according to the present invention.

In the figures: 1. Front-row heat exchange core; 11. Front-row left header; 12. Front-row right header; 2. Rear-row heat exchange core; 21. Rear-row left header; 22. Rear-row right header; 23. First rear overlapping core; 24. Second rear overlapping core; 31. Baffle; 32. Spacer; 33. Flat tube; 34. Fin; 35. Connection block; 36. Communication block; 4. Dry reservoir; 51. Air inlet joint; 52. Liquid outlet joint; 6. Cooling fan.

### DETAILED DESCRIPTION

Features and performance of the present invention are further described below in detail in combination with embodiments.

In Embodiment 1 of a vehicle of the present invention:
In this embodiment, two rows of heat exchange cores are arranged in a front-rear direction. During flowing, a refrigerant first flows in a rear-row heat exchange core, and then the cooled refrigerant flows to a front-row heat exchange core to perform further heat dissipation. Because natural cold air first passes through the front-row heat exchange core and then passes through the rear-row heat exchange core, which is heated by the front-row heat exchange core when flowing through the rear-row heat exchange core, a temperature of the air when the air flows through the rear-row heat exchange core is higher than a temperature of the air when the air flows through the front-row heat exchange core. Because a temperature of the front-row heat exchange core is lower than a temperature of the rear-row heat exchange core, temperature differences between inside and outside of the front-row and rear-row heat exchange cores are close, thereby improving overall heat dissipation efficiency of the condensing heat exchanger.

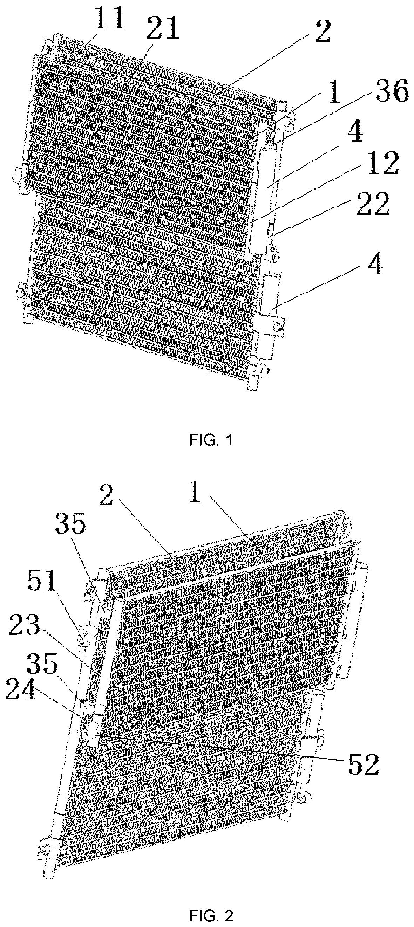

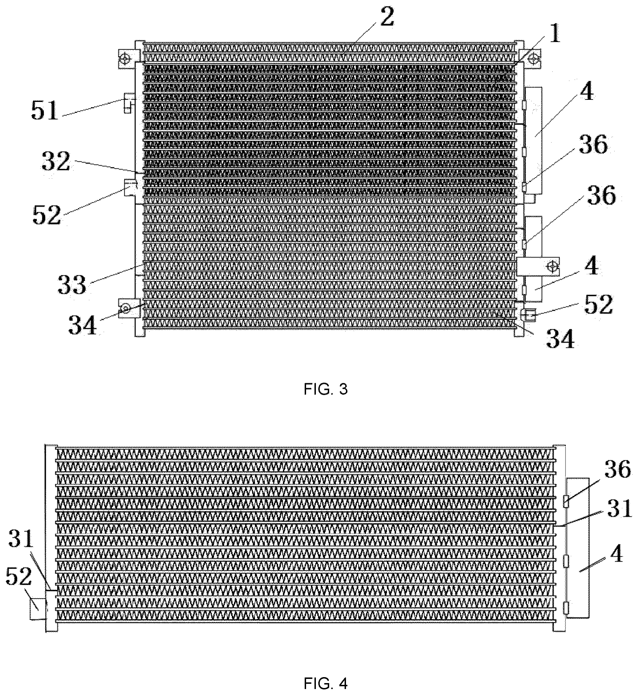

As shown in FIG. 1, FIG. 2, and FIG. 3, the vehicle includes an air conditioner system. The air conditioner system includes a condensing heat exchanger configured for heat dissipation and a cooling fan 6 arranged behind the condensing heat exchanger. The condensing heat exchanger includes a front-row heat exchange core 1 and a rear-row heat exchange core 2 arranged in side by side in two rows in a front-rear direction. Because the condensing heat exchanger has only two rows, the front-row heat exchange core 1 forms a foremost-row heat exchange core, and the rear-row heat exchange core 2 forms a rearmost-row heat exchange core. The front-row heat exchange core 1 is arranged for windward placement, so that air first passes through the front-row heat exchange core 1 and then passes through the rear-row heat exchange core 2. The front-row heat exchange core and the rear-row heat exchange core are arranged with a spacing therebetween. A connection block 35 for fixing the two and maintaining the spacing between the two is arranged therebetween. In addition, a communication block 36 configured to bring heat exchange channels of the two rows of heat exchange cores into communication is further arranged between the two rows of heat exchange cores. A channel for a refrigerant to pass through is provided inside the communication block 36. The communication block 36 is provided by the related art, which is not described in detail herein.

As shown in FIG. 1, FIG. 2, and FIG. 4, the front-row heat exchange core 1 includes a front-row left header 11 and a front-row right header 12. The front-row left header 11 and the front-row right header 12 are arranged in parallel. A plurality of flat tubes 33 in communication with the front-row left header 11 and the front-row right header 12 are arranged in parallel between the two. To enhance a heat dissipation effect, the flat tubes 33 are further provided with a fin 34. In addition, in order to enable the refrigerant to move back and forth in the front-row heat exchange core 1, a baffle 31 having a different height is further arranged. A communication block 36 is further arranged on the front-row right header 12, and a dry reservoir 4 which stores surplus refrigerants is connected to the communication block 36 to compensate for refrigerant depletion.

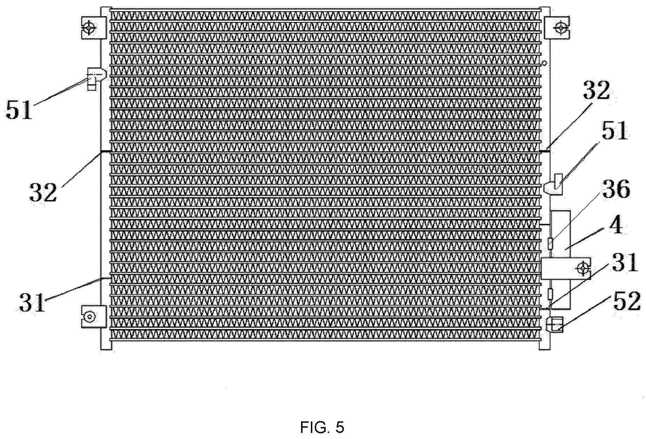

As shown in FIG. 1, FIG. 2, and FIG. 5, the rear-row heat exchange core 2 includes a rear-row left header 21 and a rear-row right header 22. The rear-row left header 21 and the rear-row right header 22 are arranged in parallel. A plurality of flat tubes 33 in communication with the rear-row left header 21 and the rear-row right header 22 are arranged in parallel between the two. To enhance a heat dissipation effect, the flat tubes 33 are further provided with a fin 34. A spacer 32 is respectively arranged at corresponding positions on the rear-row left header 21 and the rear-row right header 22, which is configured to divide the rear-row heat exchange core 2 into two portions that are not in communication with each other. The upper half portion is configured to be in communication with the front-row heat exchange core 1, and the lower half portion is configured to form an independent heat exchange channel. The upper half portion forms a first heat exchange core through which a refrigerant passes first, and correspondingly the front-row heat exchange core 1 forms a subsequent heat exchange core. An air inlet joint 51 and a liquid outlet joint 52 are separately arranged on the lower half portion, an air inlet joint 51 is arranged on the upper half portion, and a liquid outlet joint 52 is arranged on the front-row heat exchange core 1. In addition, a communication block 36 is further arranged on the rear-row right header 22, and a dry reservoir 4 which stores surplus refrigerants is connected to the communication block 36 to compensate for refrigerant depletion.

As shown in FIG. 1 and FIG. 2, an area of the front-row heat exchange core 1 is less than an area of the rear-row heat exchange core 2. The rear-row heat exchange core 2 has an overlapping portion overlapping the entire front-row heat exchange core 1 in a front-rear direction, and therefore the entire front-row heat exchange core 1 forms a corresponding portion. The rear-row heat exchange core 2 further has an exposed portion exposed from the front-row heat exchange core 1 on an upper side and a lower side. The upper exposed portion has a smaller area than the lower exposed portion. The spacer 32 is located on the overlapping portion of the rear-row heat exchange core 2. Therefore, the rear-row heat exchange core 2 includes a first rear overlapping core 23 and a second rear overlapping core 24. The first rear overlapping core 23 and the upper exposed portion are configured to be in communication with the front-row heat exchange core 1. The second overlapping core 24 and the lower exposed portion are configured to form an independent heat exchange channel.

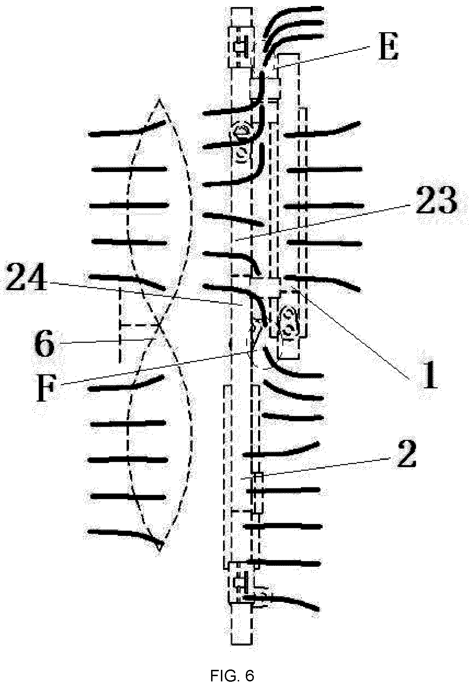

As shown in FIG. 1, FIG. 2, and FIG. 6, the cooling fan 6 is configured to rotate to draw air, so that the air flows from the front-row heat exchange core 1 to the rear-row heat exchange core 2, and then further moves rearward under the action of the cooling fan 6. An area of the cooling fan 6 is less than the area of the rear-row heat exchange core 2, and the cooling fan 6 is located on a rear side of a middle portion of the rear-row heat exchange core 2, so that an upper portion of the cooling fan 6 does not exceed a top of the front-row heat exchange core 1, and therefore a relatively large attraction force exists at the mid-portion of the rear-row heat exchange core 2. Therefore, a downward force is generated in the spacing between the front-row and rear-row heat exchange cores, as shown by air flows at E and F (as shown in FIG. 6).

During operation of the vehicle, when the air conditioner system starts to operate, the system also assists air flowing through rotation of the cooling fan 6 in addition to natural air intake. In this phase, the high-temperature and high-pressure refrigerant enters from the air inlet joint 51 at the upper portion of the rear-row heat exchange core 2, then flows to the front-row heat exchange core 1 through the communication block 36, then flows back and forth under an action of the baffle 31 of the front-row heat exchange core 1, and finally flows out through the liquid outlet joint 52 of the front-row heat exchange core 1. Because the high-temperature and high-pressure refrigerant first enters the rear-row heat exchange core 2, a temperature of the refrigerant in the front-row heat exchange core 1 is less than a temperature of the refrigerant in the rear-row heat exchange core 2. In addition, the air first passes through the front-row heat exchange core 1 with a lower temperature, to cool the refrigerant in the front-row heat exchange core 1, the air is also heated by the front-row heat exchange core, and then the heated air dissipates heat to the rear-row heat exchange core 2. Because the temperature of the front-row heat exchange core is lower than the temperature of the rear-row heat exchange core, even if the air is heated, the air can still cool the rear-row heat exchange core effectively. In other words, temperature differences between inside and outside of the front-row heat exchange core 1 and the rear-row heat exchange core 2 are close, so that a heat dissipation effect of the front-row heat exchange core 1 and the rear-row heat exchange core 2 is more equalized. It should be noted that the front-row heat exchange core 1 with a lower temperature and the rear-row heat exchange core 2 with a higher temperature in this embodiment are relative to each other in comparison.

In Embodiment 2 of the vehicle of the present invention: This embodiment provides a new arrangement form for the cooling fan. Different from Embodiment 1, the area of the cooling fan in this embodiment is equal to the area of the rear-row heat exchange core, and the cooling fan and the rear-row heat exchange core are arranged in an overlapping manner.

In Embodiment 3 of the vehicle of the present invention: This embodiment provides a new arrangement form for the cooling fan. Different from Embodiment 1, the area of the cooling fan in this embodiment is greater than the area of the rear-row heat exchange core, and the cooling fan covers a coverage of the rear-row heat exchange core.

In Embodiment 4 of the vehicle of the present invention. This embodiment provides a new arrangement form for the cooling fan. Different from Embodiment 1, the cooling fan in this embodiment is arranged in front of the frontmost-row heat exchange core, and is configured to blow air toward the frontmost-row heat exchange core. Certainly, in another embodiment, the cooling fan may not be arranged, and heat is dissipated through natural convection during movement of the vehicle.

In Embodiment 5 of the vehicle of the present invention: This embodiment provides a new arrangement form for the condensing heat exchanger. Different from Embodiment 1, in this embodiment, the dry reservoir is not arranged, or the dry reservoir is arranged only on the front-row heat exchange core or only on the rear-row heat exchange core.

In Embodiment 6 of the vehicle of the present invention: This embodiment provides a new arrangement form for the condensing heat exchanger. Different from Embodiment 1, in this embodiment, a support is arranged to maintain a spacing between two adjacent rows of heat exchange cores. Certainly, in another embodiment, two rows of heat exchange cores may be arranged close to each other.

In Embodiment 7 of the vehicle of the present invention: This embodiment provides a new arrangement form for two rows of heat exchange cores. Different from Embodiment 1, in this embodiment, portions of the rear-row heat exchange core are exposed from left and right sides, and an exposed portion having a larger area is provided with an independent heat exchange channel. Certainly, in other embodiments, the portions may be exposed from upper and lower sides, or the left and right exposed portions each may be provided with an independent heat exchange channel.

In Embodiment 8 of the vehicle of the present invention: This embodiment provides a new arrangement form for two rows of heat exchange cores. Different from Embodiment 1, in this embodiment, areas of the front-row and rear-row heat exchange cores are equal. Alternatively, the area of the rear-row heat exchange core may be set to be less than the area of the front-row heat exchange core.

In Embodiment 9 of the vehicle of the present invention: This embodiment provides a new arrangement form for the overlapping portion on the rear-row heat exchange core. Different from Embodiment 1, the overlapping portion in this embodiment is entirely used as the first heat exchange core in communication with the front-row heat exchange core.

In Embodiment 10 of the vehicle of the present invention: This embodiment provides a new arrangement form for the rear-row heat exchange core and the front-row heat exchange core. Different from Embodiment 1, in this embodiment, the rear-row heat exchange core has an overlapping portion and an exposed portion relative to the front-row heat exchange core, but the rear-row heat exchange core is exposed only from a lower side relative to the front-row heat exchange core. In other embodiments, the rear-row heat exchange core may be exposed only from an upper side, a left side, or a right side. In other embodiments, the rear-row heat exchange core may be exposed from three sides and is not exposed only from one side, for example, may not be exposed only from the upper side, the left side, the right side, or the lower side. In other embodiments, the rear-row heat exchange core is exposed from four directions, namely, front, rear, left, and right, relative to the front-row heat exchange core.

In Embodiment 11 of the vehicle of the present invention: This embodiment provides a new arrangement form for the condensing heat exchanger. Different from Embodiment 1, in this embodiment, the heat exchange cores are arranged in three rows, and an arrangement form of any two adjacent rows is the same as the arrangement form of the cores in any one of the foregoing embodiments.

In this embodiment of the condensing heat exchanger of the present invention, the structure of the condensing heat exchanger in this embodiment is the same as that of the condensing heat exchanger in any one of the foregoing embodiments, and details are not described herein.

The above description is only preferred embodiments of the disclosure and is not intended to limit the disclosure. The scope of the patent protection of the disclosure is subject to the claims, and any equivalent structural changes made by using the content of the description and drawings of the disclosure shall be included in the protection scope of the disclosure as well.

## Claims

1. A condensing heat exchanger, comprising at least two rows of heat exchange cores arranged in a front-rear direction, a frontmost-row heat exchange core is arranged for windward placement, heat exchange channels of heat exchange cores in any two adjacent rows are in communication, a rear-row heat exchange core (2) of two adjacent rows of heat exchange cores is a first heat exchange core through which a refrigerant passes first, and a front-row heat exchange core (1) of the two adjacent rows of heat exchange cores is a subsequent heat exchange core through which the refrigerant passes subsequently.

2. The condensing heat exchanger according to claim 1, wherein the rear-row heat exchange core (2) of the two adjacent rows of heat exchange cores has an overlapping portion overlapping the front-row heat exchange core (1) in the front-rear direction, and further has an exposed portion exposed from at least one side of an upper side, a lower side, a left side, and a right side of the front-row heat exchange core (1), and the front-row heat exchange core (1) of the two adjacent rows of heat exchangers has a corresponding portion arranged corresponding to the overlapping portion of the rear-row heat exchange core (2), a part or an entirety of the overlapping portion of the rear-row heat exchange core (2) of the two adjacent rows of heat exchangers is in communication with the corresponding portion of the front-row heat exchange core (1), the part or the entirety of the overlapping portion of the rear-row heat exchange core (2) forms the first heat exchange core, and the corresponding portion of the front-row heat exchange core (1) forms the subsequent heat exchange core.

3. The condensing heat exchanger according to claim 2, wherein in at least one group of two adjacent rows of heat exchange cores among the rows of heat exchange cores, an area of the rear-row heat exchange core (2) is greater than an area of the front-row heat exchange core (1), and the upper and lower sides and/or left and right sides of the rear-row heat exchange core (2) each have the exposed portion.

4. The condensing heat exchanger according to claim 3, wherein areas of the exposed portions on the upper and lower sides are not equal, the exposed portion with a smaller area is in communication with the overlapping portion, and the exposed portion with a larger area is provided with an independent heat exchange channel; and/or areas of the exposed portions on the left and right sides are not equal, the exposed portion with a smaller area is in communication with the overlapping portion, and the exposed portion with a larger area is provided with an independent heat exchange channel.

5. The condensing heat exchanger according to any one of claims 1 to 4, wherein a connection block (35) is arranged between two adjacent rows of heat exchange cores to maintain a set spacing therebetween.

6. The condensing heat exchanger according to any one of claims 1 to **4,** further comprising a dry reservoir (4) in communication with heat exchange channels of at least one row of heat exchange cores.

7. A vehicle, comprising an air conditioner system, the air conditioner system comprises a condensing heat exchanger, and the condensing heat exchanger is the same as the condensing heat exchanger according to any one of claims 1 to 6.

8. The vehicle according to claim 7, wherein the air conditioner system comprises a cooling fan (6) arranged on a rear side of the condensing heat exchanger, and the cooling fan (6) is configured to draw air so that the air passes through the rows of heat exchange cores in sequence from front to rear.

9. The vehicle according to claim 8, wherein an area of the cooling fan (6) is less than or equal to an area of a rearmost-row heat exchange core.

10. The vehicle according to claim 8, wherein an area of the cooling fan (6) is less than an area of a rearmost-row heat exchange core, and the cooling fan (6) is located on a rear side of a middle portion of the rearmost-row heat exchange core.
